Europäisches Patentamt

European Patent Office

Office européen des brevets

(19)

(11) Numéro de publication : **0 133 409**
**B1**

(12)

# FASCICULE DE BREVET EUROPÉEN

(45) Date de publication du fascicule du brevet :
15.06.88

(51) Int. Cl.⁴ : **C 03 B 5/027**, C 03 B 5/18,
C 03 B 5/225, C 03 B 7/02

(21) Numéro de dépôt : 84401654.3

(22) Date de dépôt : 09.08.84

(54) Procédé et dispositif de fusion, d'affinage et d'homogénéisation de verre et leurs applications.

(30) Priorité : 09.08.83 FR 8313080

(43) Date de publication de la demande :
20.02.85 Bulletin 85/08

(45) Mention de la délivrance du brevet :
15.06.88 Bulletin 88/24

(84) Etats contractants désignés :
AT BE CH DE FR GB IT LI LU NL SE

(56) Documents cités :
DE-A- 2 426 297
FR-A- 1 581 242
US-A- 1 820 248
US-A- 1 905 534
US-A- 2 283 188
US-A- 3 400 204
US-A- 3 942 968
GLASTECHNISCHE BERICHTE, vol. 53, no. 6, 1980,
pages 145-148, Frankfurt, DE; K. ECKHARDT:
"Praktische Erfahrungen mit einer kleinen, kontinuierlich arbeitenden elektrisch beheizten Wanne"

(73) Titulaire : **SAINT-GOBAIN VITRAGE**
**Les Miroirs 18, avenue d'Alsace**
**F-92400 Courbevoie (FR)**

(72) Inventeur : **Noiret, Robert**
**9 rue de la Dive Domaine de la Vallée**
**F-78200 Mantes la Ville (FR)**
Inventeur : **Zortea, Michel**
**7, rue Just de la Bretonnière**
**F-71100 Chalon sur Saone (FR)**

(74) Mandataire : **de Toytot, Robert et al**
**SAINT-GOBAIN RECHERCHE 39 quai Lucien Lefranc**
**F-93300 Aubervilliers (FR)**

## Description

La présente invention concerne l'élaboration, selon un processus continu de production, de verre fondu présentant des qualités d'affinage et d'homogénéité de haut niveau, tel que celui satisfaisant aux exigences de la fabrication du verre plat et plus particulièrement du verre flotté.

Elle a trait à un procédé et un dispositif perfectionné d'affinage et d'homogénéisation de verre fondu susceptibles de s'appliquer à la suite de la fusion du mélange vitrifiable, aussi bien par flammes que par voie électrique, mais plus spécialement adapté à ce dernier cas, car tirant le meilleur profit de ses avantages propres.

Elle vise également une installation complète d'élaboration de verre affiné et homogène, dans laquelle l'énergie est apportée essentiellement par voie électrique, répondant ainsi à un besoin très actuel, résultant de l'avantage, au plan du prix de revient, que tend à prendre l'énergie d'origine nucléaire sur les autres sources d'énergie, et en particulier les hydrocarbures.

Elle intéresse enfin les applications de ce dispositif, notamment pour l'élaboration de verres à partir de charges à constituants très volatils dont elle permet de minimiser les pertes et par conséquent de réduire à la fois le coût des matières premières et la pollution de l'atmosphère.

On a déjà proposé, à ce jour, de nombreux dispositifs de fabrication de verre fondu faisant appel à l'énergie électrique.

Certains procèdent essentiellement d'une adaptation des fours à flammes, et par exemple, dans un bassin allongé tel que celui des actuels fours industriels à flammes pour verre plat, ils prévoient un certain nombre d'électrodes, disposées en principe de manière à reproduire dans ledit bassin sensiblement les mêmes courants de convection qui se sont avérés, dans lesdits fours industriels à flammes, permettre d'obtenir le déroulement en continu des différentes étapes du processus d'élaboration du verre propre à être au formage, à savoir la fusion proprement dite, l'affinage, l'homogénéisation et la braise. Ces dispositifs électriques supposent une infra-structure relativement complexe et coûteuse, leur rendement énergétique n'est généralement que du même ordre que celui des fours à flammes traditionnels, et la transposition des connaissances acquises en cas de changement d'échelle de la capacité de production, pour un type donné d'installation, est souvent délicate.

Le dispositif décrit par le brevet FR-A-2 261 233, par exemple, qui comporte un bassin allongé alimenté en matières vitrifiables à l'extrémité dite amont, et délivrant à l'extrémité dite aval du verre fondu apte à être utilisé par une installation pour verre plat, est chauffé par une série de rangées d'électrodes verticales traversant la sole, disposées transversalement à la longueur du bassin. Les courants de convection majeurs mis en œuvre dans ce bassin ont pour origine, comme dans les fours à flammes de ce type, la zone la plus chaude du verre, ou point source, localisée au moyen d'au moins une, et de préférence deux rangées transversales d'électrodes verticales, qui provoquent sur pratiquement toute la largeur de la cuve le mouvement ascendant d'une colonne de verre plus chaud, qui s'épanouit en deux flux, en arrivant à la surface du bain, pour former deux courants thermiques majeurs en anneau. Le premier flux, dirigé vers l'amont, va lécher la surface inférieure de la motte de composition, s'y refroidit, plonge vers la sole et repart vers l'aval, en partie inférieure du bain, jusqu'au point source, où il est repris par le courant ascendant, formant ainsi un courant en anneau désigné ci-après par l'expression « courroie de fusion ».

Le second flux superficiel majeur, dirigé vers l'aval du four, traverse, au-delà de la zone d'affinage, les zones d'homogénéisation et de braise, désignées globalement dans le brevet cité par l'expression « zone de conditionnement », avant d'atteindre le poste d'évacuation, où une partie seulement de ce courant est prélevée, le reste revenant au point source, par la partie inférieure du bain, pour y être recyclé, constituant ainsi un second courant en anneau dit ci-après « courroie d'homogénéisation ».

Le brevet cité indique d'ailleurs que, comme on l'observe aussi dans les fours à flammes de type analogue, chacune de ces deux courroies comporte des court-circuits, c'est-à-dire que certaines veines reviennent au point source sans avoir effectué la totalité du parcours décrit.

Un inconvénient des fours de ce type, qu'ils soient à flammes ou électriques, réside dans le risque de transport direct de matières, depuis la motte de composition jusqu'au poste d'évacuation, sans que leur soient appliqués, de manière suffisamment complète, les divers processus de l'élaboration du verre.

On réduit évidemment ce risque en augmentant le taux de recyclage de la matière dans chacune des deux courroies thermiques majeures, mais, en contre-partie, on accroît alors le coût énergétique de la fabrication puisque, si on considère la courroie d'homogénéisation, par exemple, ledit recyclage implique la fourniture, répétée à chaque cycle, de la quantité de chaleur nécessaire pour élever la température de la matière de la température du verre au poste d'évacuation, de l'ordre de 1 200 °C, à la température d'affinage, de l'ordre de 1 500 °C. Or le taux de recyclage dans cette courroie, égal au rapport des débits du courant de retour et de la tirée, est usuellement au moins de l'ordre de 5, et souvent de 10.

Outre les dispositifs de ce type, décrits ci-dessus d'une manière volontairement détaillée, afin de présenter les phénomènes observés dans les fours à bassin actuels et, tout à la fois, de définir un vocabulaire utile à la description de la présente invention, on peut citer, au titre de l'art antérieur susceptible d'être pris en considération à propos de l'invention, des dispositifs comportant un

2

cloisonnement de la cuve, allant jusqu'à affecter un compartiment particulier à chacune des opérations principales à mettre en œuvre en vue de la fourniture du verre de la qualité désirée.

Divers brevets, dans un passé déjà ancien, tels les documents US-A-1 820 248, US-A-2 283 188, FR-A-977 606, ou même relativement récent, tel le document GB-A-986 843, ont ainsi proposé des dispositifs comportant une cuve de fusion et un bassin d'affinage et de conditionnement, dont les régions inférieures sont reliées l'une à l'autre par une gorge, et qui sont équipés d'électrodes pour chauffage par effet Joule direct au travers du verre fondu. Bien que généralement refroidie, la gorge peut cependant être également chauffée électriquement, ainsi qu'il est mentionné, en particulier, par le document US-A-1 820 248, par une interconnexion des transformateurs alimentant les deux compartiments principaux. A eux seuls, de tels moyens s'avèrent cependant insuffisants pour conduire à des développements industriels satisfaisant aux exigences actuelles en matière d'affinage, pour des raisons qui, selon les enseignements de la présente invention, tiennent notamment à une insuffisance de la maîtrise du processus d'affinage et de sa localisation dans l'espace et dans le temps, et aux perturbations que lui apportent les phénomènes de convection affectant le bassin de conditionnement.

Il ressort en effet des textes de ces brevets que, dans le cadre des moyens qu'ils prévoient, le processus de l'affinage s'étend à la fois sur la cuve de fusion et sur le bassin de conditionnement.

Le document US-A-3 942 968 propose un dispositif susceptible de prétendre éviter une telle interférence du processus de conditionnement sur celui de l'affinage, mis en œuvre essentiellement dans la liaison complexe menant de la cuve de fusion au canal de conditionnement. Selon le procédé décrit par ce document, en effet, le processus d'affinage prévoit un transfert sur un trajet ascendant menant à une surface libre de dégazage se situant en amont d'un agitateur, ou immédiatement en aval, ladite surface libre étant de préférence soumise à un vide partiel, et ledit agitateur travaillant en opposition avec le flux de verre.

Ce dispositif implique des sujétions difficiles à assumer pour des productions industrielles de haute qualité et forts tonnages, telles que de verre flotté, notamment au regard de la mise en œuvre d'un vide partiel et de l'usure des pièces en mouvement, ainsi que de la pollution du verre qui en résulte.

Le document FR-A-1 581 242 présente un procédé localisant très précisément les phénomènes d'affinage dans la chambre de fusion, grâce à une distribution très précise de l'énergie dissipée dans l'installation. Une telle technique, peut-être satisfaisante pour une production artisanale, ne peut malheureusement pas être transposée à des productions industrielles de forts tonnages spécifiques, qui exigeraient une homogénéisation et un conditionnement beaucoup plus poussés, et par conséquent un changement d'échelle dans les dimensions de la zone à lui consacrer, et surtout un réchauffage du verre, qui imposerait à nouveau son affinage.

Pour mémoire, on citera encore ci-après divers documents qui présentent d'autres solutions à l'amélioration de la maîtrise des phénomènes de convection et du confinement de la zone d'affinage. Par exemple le brevet US-A-4 012 218 propose d'extraire le produit élaboré dans le compartiment de fusion par débordement, en un courant de surface, vers le compartiment d'affinage, où il reçoit un chauffage complémentaire. Le verre affiné se sépare alors par décantation, et est extrait du compartiment d'affinage en partie basse. Cependant, la qualité de l'affinage peut être affectée par les courants plus froids descendant plus rapidement le long des parois que dans la région centrale du compartiment d'affinage. En outre l'obtention d'un produit homogène satisfaisant aux normes visées par l'invention n'est pas décrite.

Selon ce même objectif de cloisonnement en compartiments affectés aux principales opérations de l'élaboration, et spécialement à l'affinage, le brevet US-A-1 773 111 prévoit, à la suite d'une cellule de fusion des matières vitrifiables, une cellule d'affinage, suivie elle-même d'une cellule de conditionnement, la cellule d'affinage présentant la particularité que le bain qu'elle contient est maintenu constamment recouvert d'une couche de mousse isolante dont la peau supérieure est figée, formant ainsi un écran thermique stable. Une telle installation présente l'inconvénient de ne pas permettre d'atteindre les niveaux d'affinage et d'homogénéité correspondant aux exigences que vise à satisfaire la présente invention. En effet, sa cellule d'affinage, du fait de la disposition de ces diverses électrodes, les unes horizontales, les autres verticales, est le siège de multiples courants thermiques, qui se contrarient et tendent à faire fonctionner ladite cellule en mélangeur parfait, conduisant à délivrer un produit hétérogène quant à la durée et les conditions de traitement, c'est-à-dire le « passé thermique », et dont, par là-même, le niveau de qualité de l'affinage se trouve plafonné. Quant à sa cellule de conditionnement, sa forme semi-circulaire se prête très mal à sa création des courants de convection qui, dans les fours à bassin du type décrit précédemment, permettent de délivrer au poste d'évacuation un courant de tirée constitué de verre protégé du contact avec les parois et la sole en matériaux réfractaires.

La présente invention se propose de remédier aux divers inconvénients des dispositifs de cet art antérieur, et vise particulièrement à minimiser le coût énergétique des opérations d'affinage et d'homogénéisation, tout en garantissant un niveau élevé de performances dans ces opérations.

La présente invention a ainsi pour objet un dispositif d'élaboration de verre affiné selon une fabrication continue, comprenant un compartiment de fusion comportant des moyens de chauffage pour la fusion d'une charge vitrifiable et une cuve dite de fusion pour contenir le bain de matériaux vitreux fondu obtenu, un compartiment d'affinage comportant une cuve en forme de cheminée ou de trémie constituant un conduit sensiblement vertical, une gorge immergée reliant le niveau inférieur de ladite

3

**0 133 409**

cuve de fusion au niveau inférieur dudit conduit vertical, par laquelle ledit matériau vitreux fondu provenant de ladite cuve de fusion est délivré dans ledit conduit vertical, et des moyens d'extraction pour prélever ledit matériau vitreux fondu au niveau supérieur dudit conduit vertical, ledit compartiment d'affinage étant muni d'électrodes immergées de chauffage pour amener à la température usuelle de débullage ledit matériau vitreux fondu parvenant au niveau supérieur du bain dans ledit conduit vertical, lesdites électrodes immergées de chauffage dudit compartiment d'affinage étant munis de moyens de réglage de leur puissance de chauffe et présentent une dissémination dans le volume dudit compartiment d'affinage tels qu'ils permettent d'assurer une élévation homogène et progressive de la température du matériau fondu contenu dans ledit conduit vertical depuis son niveau inférieur jusqu'à son niveau supérieur, provoquant un mouvement ascensionnel d'ensemble dudit matériau sur ce parcours, excluant tout courant descendant de retour, ladite puissance de chauffe desdites électrodes immergées de chauffage permettant d'imposer, au débit de production visé, un échauffement d'au moins 100 °C du matériau fondu pour accéder à la température de débullage, lesdits moyens d'extraction comportant une liaison présentant au raccordement avec le compartiment d'affinage, pour le passage du verre extrait, un étranglement de section verticale transversale du flux de verre de valeur inférieure à celle de la section horizontale dudit conduit vertical à son niveau supérieur.

Avantageusement, lesdits moyens de chauffage comprennent un organe de chauffage dissipant de l'énergie dans une zone horizontale médiane, proche du débouché de la gorge, du flux de matière qui s'en échappe, de manière à favoriser un effet de tirage dans la cheminée.

De préférence encore, les moyens de chauffage comprennent des organes dissipant une notable quantité d'énergie à une distance de la paroi amont de la cheminée assez faible pour y rendre négligeable tout courant descendant résultant de l'effet de paroi froide, et favoriser ainsi, au niveau supérieur du verre dans la cheminée, la formation dès ladite paroi amont du courant de surface dirigé vers l'aval.

Une structure préférée de cheminée se présente en forme de trémie évasée vers le haut, c'est-à-dire dont la section croît du bas vers le haut, comprenant avantageusement du côté aval une paroi plane inclinée, de manière à concourir principalement à cet évasement, par une inclinaison de préférence comprise entre 50 et 80°.

Ainsi, les autres parois constituant la trémie, par exemple une paroi amont, et deux parois latérales, seront généralement verticales, les deux parois latérales étant alors parallèles au plan de symétrie de la cuve, et la paroi amont orthogonale à ce plan. Une telle structure est d'une construction et d'une utilisation aisées, et facilite le mouvement ascensionnel, puis le courant de surface du flux de matière fondue vers l'aval.

Lesdits moyens de chauffage sont constitués avantageusement d'électrodes immergées dans le bain, produisant un dégagement de chaleur par effet Joule direct, au travers même du bain. De préférence, lesdites électrodes sont horizontales et disposées transversalement, c'est-à-dire parallèlement aux parois amont et aval de ladite trémie, leur partie active s'étendant avantageusement d'une paroi latérale à l'autre de la cuve, afin de favoriser l'homogénéité de l'échauffement final du flux de verre. Des électrodes verticales, traversant la sole peuvent également être prévues à titre principal ou complémentaire dans le cas de très grands fours, pour renforcer le mouvement ascensionnel d'ensemble, ainsi que des électrodes horizontales traversant la paroi aval.

En vue d'assurer l'effet de tirage de la trémie du compartiment d'affinage, la section verticale de la sortie de la gorge immergée présente avantageusement une valeur inférieure à celle de la section horizontale de la partie inférieure de la trémie, et cette dernière une valeur au moins égale à 30 % de la section horizontale de la partie supérieure, la hauteur de ladite trémie étant au moins de l'ordre de la racine carrée de l'aire de la section horizontale de ladite partie supérieure.

Selon une autre caractéristique avantageuse du dispositif de l'invention, la liaison entre le compartiment d'affinage et.le poste de travail suivant, qui peut être avantageusement un compartiment de conditionnement et d'homogénéisation, présente un étranglement de section verticale transversale de valeur intermédiaire entre celles des sections horizontales inférieure et supérieure de la trémie, et comporte de préférence un épanouissement correspondant à un accroissement du passage offert au flux de verre au moins égal à 20 %, les parois latérales de l'épanouissement faisant avec celles des compartiments qu'il relie un angle inférieur à 60°, évitant ainsi les angles morts préjudiciables à l'écoulement du flux de verre fondu.

Le compartiment de conditionnement ainsi prévu par l'invention en combinaison avec l'affineur se présente avantageusement sous la forme d'un canal de section verticale transversale sensiblement rectangulaire, d'une longueur au moins égale à trois fois sa largeur. Sa profondeur moyenne sera avantageusement comprise entre 0,4 et 0,8 m, et de préférence 0,5 et 0,7 m. Par exemple, une profondeur de 0,6 m sera avantageusement adoptée pour un canal de 2 m de large convenant pour une tirée de 120 à 150 t/j, en vue de l'établissement d'un courant de retour de débit voisin de celui du courant de tirée, c'est-à-dire d'un taux de recirculation de 1.

La sole dudit canal peut avantageusement comporter une pente ascendante de l'amont vers l'aval, la profondeur du verre à chaque extrémité restant toutefois avantageusement comprise dans les limites fixées pour la profondeur moyenne.

La section offerte par l'orifice d'évacuation pour le prélèvement du verre en vue de son formage représente avantageusement de 30 à 50 % de la section de l'extrémité aval du canal de conditionnement.

La sole dudit canal est avantageusement limitée vers l'amont par rapport à la trémie d'affinage, et surtout en l'absence d'un épanouissement de liaison dans le bain de verre, réduisant la section verticale transversale de passage du verre, d'une valeur comprise généralement entre 20 et 60 %, par rapport à la section maximale offerte au bain dans le compartiment de conditionnement.

En outre, on prévoit avantageusement un cloisonnement de l'atmosphère entre les deux compartiments, par exemple au moyen d'un écran mobile réfractaire susceptible d'être abaissé jusqu'à proximité de la surface du bain.

En amont de cet écran, peuvent avantageusement être prévus des brûleurs permettant principalement le maintien en légère surpression de l'atmosphère du compartiment d'affinage, pour éviter toute rentrée d'air froid, ainsi qu'un apport thermique complémentaire utile par exemple en cas d'incident dans la conduite du chauffage électrique, de remplacement d'électrodes, etc... Des brûleurs sont également prévus, de préférence, dans le compartiment de conditionnement.

Le canal de conditionnement peut en outre être muni d'agitateurs, de préférence dans sa moitié amont, permettant ainsi de réduire la longueur dudit canal, et d'augmenter la tirée et/ou l'homogénéité du verre obtenu.

Selon une forme avantageuse d'exécution du dispositif de l'invention, le compartiment de fusion des matières vitrifiables, destiné à préparer un verre fondu apte à être traité dans les compartiments suivants, qui viennent d'être décrits, comprendra une cuve chauffée électriquement, du type cubilot.

Cette cuve sera généralement de forme rectangulaire, d'une profondeur de l'ordre de 1 à 1,5 mètre, les électrodes étant disposées de manière connue en soi, par exemple traversant la sole.

Le mélange vitrifiable est distribué, par un répartiteur approprié, par exemple du type décrit par la demande de brevet français publiée n° 2 512 007, sur toute la surface de la cuve, et la fusion est effectuée à « voûte couverte », ou « voûte froide », c'est-à-dire sous une couche continue de mélange vitrifiable, l'extraction du verre fondu s'effectuant de préférence par un orifice ménagé au niveau de la sole.

Ladite couche continue joue un rôle d'écran thermique et permet en outre de réduire la pollution, en retenant une forte proportion des composants volatils éventuellement présents dans la charge, tels que le sélénium, le bore, etc...

La présente invention a également pour objet un procédé d'élaboration de verre affiné selon une fabrication continue comprenant une phase dite de fusion, formant un bain d'un matériau vitreux, par fusion d'une charge vitrifiable dans une chambre de fusion, une phase d'affinage, visant un débullage dudit matériau vitreux fondu, se situant essentiellement dans une chambre d'affinage comprenant un conduit vertical, ledit matériau vitreux fondu étant transféré par pression hydrostatique de ladite chambre de fusion à ladite chambre d'affinage par une gorge immergée reliant un niveau inférieur du bain de ladite chambre de fusion à un niveau inférieur de ladite chambre d'affinage puis soumis dans ladite chambre d'affinage à un échauffement provoquant un mouvement ascendant dudit matériau et le portant à une température permettant son débullage par la surface libre surmontant le bain contenu dans ladite chambre d'affinage, et une phase d'extraction du verre affiné par une liaison horizontale menant de la chambre d'affinage vers une chambre de conditionnement par prélèvement à la partie supérieure du bain contenu dans ladite chambre d'affinage, dans lequel ledit échauffement appliqué au bain contenu dans ladite chambre d'affinage est apporté en des zones disséminées dans le volume du bain et en des puissances réglées de manière à assurer une élévation homogène et progressive de la température dudit matériau fondu depuis le niveau inférieur jusqu'au niveau supérieur dudit conduit vertical et à provoquer un mouvement d'ensemble dudit matériau fondu sur ce parcours, en un flux continu vertical excluant tout courant descendant en retour, ladite élévation de température étant d'au moins 100 °C jusqu'à ladite température de débullage correspondant de préférence à une viscosité d'au plus 5 Pa. s (50 poises), ledit flux étant ensuite dévié en un courant de surface en direction de ladite chambre de conditionnement, la vitesse du flux de matériau vitreux affiné étant, au niveau de ladite liaison, supérieure à la vitesse dudit flux vertical lors de son mouvement ascensionnel dans ledit conduit vertical, puis décroissante au-delà.

De manière également avantageuse, ledit flux présente une vitesse ascensionnelle plus faible en partie haute de la zone d'affinage qu'en partie basse.

De manière préférée, le prélèvement de verre effectué par le courant de surface provenant de la zone d'affinage alimente une zone de conditionnement dans laquelle le verre est homogénéisé par une courroie de recirculation et refroidi à une température favorable au formage, correspondant généralement à une viscosité de l'ordre de 100 Pa.s (1 000 poises).

Avantageusement, le flux de matière assurant la liaison horizontale entre la zone d'affinage et la zone de conditionnement est conduit à une vitesse supérieure à la vitesse dudit flux lors de son mouvement ascensionnel, puis est ralenti d'au moins 20 % à son entrée dans la zone de conditionnement.

Selon une caractéristique avantageuse du procédé de l'invention, les courants de convection régnant dans la zone de conditionnement sont constitués principalement d'un courant de surface dirigé vers l'aval, c'est-à-dire le poste d'évacuation du verre apte au formage, et d'un courant de sole dirigé vers l'amont, ou courant de recirculation, ledit courant de recirculation représentant de 0,5 à 3 fois le débit de la tirée et de préférence de l'ordre de 1 fois ce débit, le courant de tirée provenant préférentiellement de la partie superficielle du courant de surface.

De préférence, l'échauffement de la masse en fusion prend place pour sa plus grande part, au cours de son mouvement ascensionnel d'ensemble.

Avantageusement, ledit échauffement de la masse en fusion est initié au niveau de son admission dans la zone d'affinage, dans une zone horizontale médiane dudit flux.

Dans une forme avantageuse d'exécution du procédé de l'invention, l'échauffement entre lesdites températures est obtenu par effet Joule direct au travers de la matière fondue à affiner, entre des électrodes immergées dans celle-ci.

Selon un mode d'exécution du procédé spécialement applicable à une charge vitrifiable contenant au moins un agent affinant, ledit échauffement de la masse en fusion, au cours de sa traversée de la zone d'affinage, s'effectue de préférence d'un niveau inférieur à la température de décomposition de l'agent affinant à un niveau auquel ledit agent affinant présente une très notable vitesse de décomposition.

Par exemple, en vue de la fabrication de verres silico-sodo-calciques tels que les verres industriels usuels contenant de 68 à 74 % de $SiO_2$, de 0 à 3 % de $Al_2O_3$, de 12 à 15 % de $Na_2O$, de 8 à 12 % de CaO, la charge vitrifiable apportant ces éléments contient avantageusement des sulfates en quantité correspondant à environ 0,3 à 0,5 % et plus généralement au moins à 0,1 % de $SO_3$, et l'échauffement de la masse en fusion au cours de sa traversée de la zone d'affinage recouvre de préférence au moins le domaine de température compris entre 1 370 et 1 480 °C. A cette fin, la masse en fusion s'échappant de la zone de fusion subit éventuellement un refroidissement durant son transfert au long de la gorge immergée jusqu'à la zone d'affinage pour abaisser sa température au-dessous de la valeur constituant la borne inférieure du domaine ci-dessus défini.

De manière préférée, l'atmosphère surmontant le verre au-dessus de la zone d'affinage est isolée par un cloisonnement de celle qui règne au-dessus de la zone de conditionnement, une surpression étant en outre créée dans ladite zone d'affinage au moyen de gaz de combustion provenant de brûleurs.

Selon l'invention, le verre fondu soumis à l'affinage est de préférence élaboré par fusion électrique sous voûte froide, c'est-à-dire constituée du mélange vitrifiable à fondre, le prélèvement s'effectuant par la partie inférieure du bain.

L'invention a enfin pour objet les applications desdits dispositif et procédé, notamment à la fabrication de verres contenant des proportions importantes de composants à fortes tensions de vapeur.

Parmi les réactions de la fusion du verre qui conduisent à des dégagements gazeux, seront essentiellement mises en œuvre dans le four cubilot les réactions de décarbonatation, qui n'exigent que des températures inférieures à 1 200 °C, tandis que celles qui correspondent à la décomposition des agents affinants ne seront de préférence que secondaires, en limitant les surchauffes locales de la masse fondue grâce à un choix approprié du nombre, des dimensions et de la disposition des électrodes.

Le verre sortant d'une telle cellule cubilot présente un degré d'affinage correspondant à un nombre de bulles de plus de 30 microns de diamètre généralement compris entre 2 500 et 7 500, éventuellement même de l'ordre de 250, par $dm^3$ de verre, la qualité d'affinage étant d'ailleurs difficilement maîtrisable au moyen de la température, et donc de la seule puissance injectée, mais plutôt grâce à un ajustement de la composition du mélange vitrifiable. Une telle qualité s'avère, en tout état de cause, inappropriée pour la fabrication de verre flotté qui exige un taux maximal de 2 à 3 bulles par $dm^3$. La cellule d'affinage, éventuellement combinée à une cellule de conditionnement, telle que proposée par l'invention, vient donc compléter cette cellule de fusion, de manière très avantageuse, particulièrement au regard de la maîtrise de l'affinage et du coût des agents affinants à introduire dans la charge.

Si l'exigence de qualité en matière d'affinage est plus faible, par exemple correspondant à environ 125 bulles par $dm^3$ de verre, par exemple pour produire du très beau flaconnage, l'élaboration pourra être moins poussée dans le four de fusion, permettant une économie notable d'énergie et d'usure des réfractaires de la cuve du cubilot, la cellule d'affinage, et éventuellement la cellule de conditionnement remplissant de manière très fiable l'intégralité des fonctions qui leur sont normalement assignées.

Une installation d'élaboration de verre à chauffage électrique des trois compartiments de fusion, d'affinage et de conditionnement, telle qu'elle est décrite plus haut, présente à l'égard des installations traditionnelles un ensemble d'avantages découlant de la réduction d'échelle qu'elle permet (taux d'environ 1/10 pour la surface de sole) : son inertie, en particulier, est très faible puisqu'on a pu noter, par exemple, des « temps de réponse », c'est-à-dire des délais pour l'obtention de 90 % de la réponse finale à une modification permanente d'une donnée concernant la charge, par exemple, de l'ordre de 10 à 12 heures pour ce type d'installation, à comparer à 8 à 10 jours pour les fours à flammes traditionnels produisant du verre apte au flottage.

Il en résulte une souplesse de fonctionnement très améliorée, et des économies importantes dans les investissements et à l'utilisation. Les changements de teinte, par exemple, peuvent se faire beaucoup plus rapidement. La maîtrise de l'oxydo-réduction de l'atmosphère, par ailleurs, est grandement facilitée, de même que celle des envols et des pertes en matières volatiles, ce qui permet notamment d'appliquer l'invention de manière particulièrement avantageuse à l'élaboration des verres colorés au sélénium, par exemple.

Par ailleurs, l'expérience a montré qu'une bonne homogénéité de la pâte de verre fondu, se traduisant par une stratification régulière de la feuille de verre formée par laminage ou par flottage à partir de cette pâte, pouvait être obtenue avec un taux de recirculation dans la courroie aval de l'ordre de 0,5 à 3, c'est-à-dire un débit du courant de retour de 0,5 à 3 fois le débit de la tirée, et, de manière particulièrement stable, de l'ordre de 1, fonctionnement par conséquent très économique quant à la dépense d'énergie.

Dans ces conditions, le compartiment d'affinage proprement dit peut avoir des dimensions assez faibles pour que le temps moyen de transit du verre entre la sortie de la gorge immergée et l'écran d'atmosphère marquant la fin de zone chaude puisse s'abaisser à une valeur de l'ordre de 30 minutes.

La tirée spécifique, rapportée à la surface totale de sole de l'installation, peut ainsi couramment atteindre 3 à 5 t/m²/jour.

Le dispositif selon l'invention et son mode de fonctionnement seront maintenant décrits, à titre d'exemples non limitatifs, en référence aux dessins qui représentent :
— Figure 1 : une vue en élévation, en coupe selon I-I' de la figure 2, d'un dispositif selon l'invention,
— Figure 2 : une vue en plan, en coupe selon II-II' de la figure 1, de ce même dispositif,
— Figures 3 et 4 : des vues analogues, respectivement, aux figures 1 et 2, présentant des caractéristiques de structures mieux adaptées à un dispositif de plus grande échelle que celui des figures 1 et 2, permettant des productions journalières de l'ordre de la centaine de tonnes.

## Exemple 1

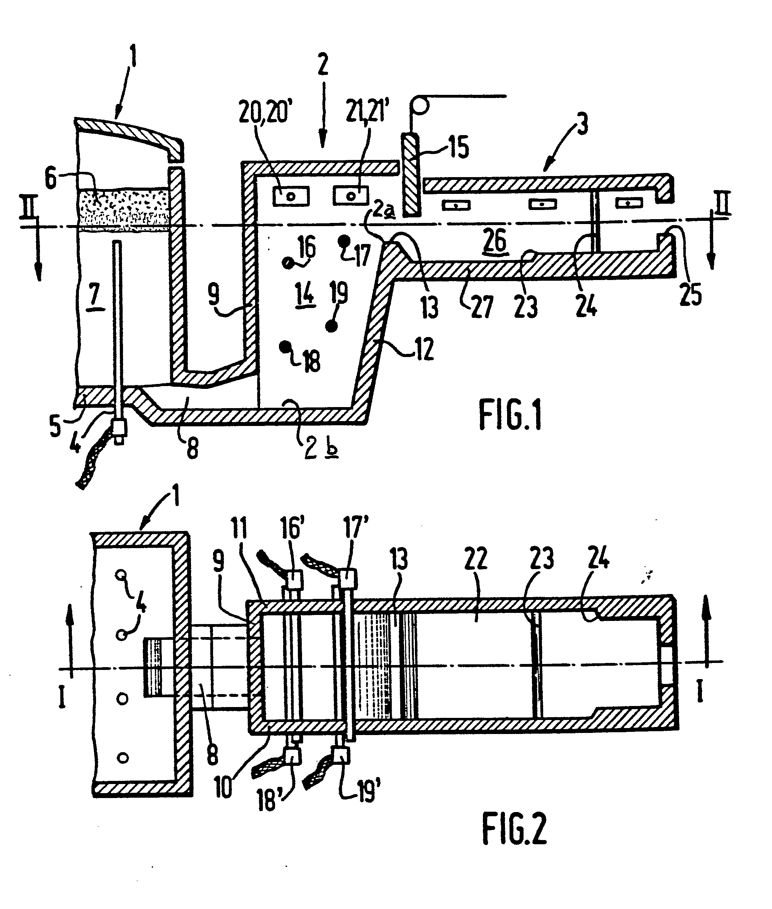

Les figures 1 et 2 représentent schématiquement, chacune en coupe, respectivement l'une par le plan vertical de symétrie de l'installation et l'autre par le plan horizontal correspondant sensiblement au niveau supérieur du bain de verre dans les compartiments d'affinage et de conditionnement, un dispositif faisant appel à l'énergie électrique pour effectuer les diverses opérations de fusion, d'affinage et de conditionnement du verre, dans les compartiments correspondants respectivement aux repères 1, 2 et 3.

Le four de fusion 1 proprement dit correspond au type connu sous la désignation du four cubilot. Il est chauffé par des électrodes verticales 4 immergées, traversant sa sole 5, et alimenté par un distributeur non représenté répartissant le mélange vitrifiable 6 sur toute la surface de la matière en fusion 7.

Le four cubilot 1 fournit le compartiment d'affinage 2 en verre fondu par l'intermédiaire de la gorge immergée 8, qui prélève la matière en fusion ayant décanté sur la sole 5 du cubilot 1. La gorge 8 comporte avantageusement au moins une partie divergente ouvrant sur la partie inférieure du compartiment d'affinage 2. Ledit compartiment 2 présente une structure ayant une allure générale de trémie ou d'entonnoir, dont la section est plus grande à sa partie supérieure 2a qu'à sa base 2b, au niveau de laquelle débouche la gorge 8. Dans la forme d'exécution représentée par les figures 1 et 2, la paroi amont 9, les parois latérales 10 et 11, toutes trois verticales, et la paroi aval 12, inclinée vers l'aval d'un angle de l'ordre de 70° par rapport à l'horizontale, constituent, avec le seuil 13, la cuve d'affinage 14 proprement dite, ledit seuil 13 délimitant pratiquement, en ce qui concerne le bain de verre, la zone la plus chaude du four, visant à l'affinage du verre, par rapport à la zone aval visant à son conditionnement. Un écran mobile suspendu 15 constitue une délimitation analogue, pour l'atmosphère entre les deux compartiments 2 et 3.

Le compartiment 2 est chauffé par un jeu de 4 électrodes 16, 17, 18, 19 traversant la cuve 14 d'une paroi à l'autre. Les amenées de courant 16', 17', 18', 19' aux électrodes sont représentées réparties de part et d'autre des parois 10 et 11, mais il est souhaitable, pour des largeurs de compartiments d'affinage supérieures à 1 m, par exemple, d'adopter une alimentation en parallèle de chacune des 2 extrémités de chaque électrode, lesdites électrodes pouvant d'ailleurs être constituées chacune de 2 moitiés, mises en place en regard l'une de l'autre au travers des parois 10 et 11.

Le compartiment d'affinage 2 comprend avantageusement un mode de chauffage additionnel, sous la forme de 2 groupes de 2 brûleurs 20-20', 21-21', disposés chacun dans l'une des parois 10 et 11, afin d'être utilisés notamment lors de l'attrempage de la cellule, et lors du remplacement d'une électrode, et en vue d'assurer une légère surpression s'opposant à toute rentrée d'air froid extérieur.

Le compartiment de conditionnement 3 comporte également un certain nombre de brûleurs analogues, répartis dans ses parois latérales, permettant la maîtrise de la température au long du canal 22, lequel comprend une marche 23, un rétrécissement de largeur 24, et un orifice d'extraction 25 pour le verre à livrer au formage.

A titre indicatif, on donne ci-après les conditions de fonctionnement d'une installation selon l'invention prévue pour une production journalière de l'ordre de 4 t/jour de verre apte au formage, de très bonne qualité d'affinage.

Les dimensions et paramètres principaux du dispositif conforme à la description précédente, comprenant four de fusion 1, gorge 8, cellule d'affinage 2 et canal de conditionnement 3 sont donnés ci-après :

|  | | Fusion (1) | Gorge (8) | Affinage (2) | Condition. (3) |
|---|---|---|---|---|---|
| Longueur | (m) | 1,2 | 0,5 | 0,4 (bas) 0,7 (haut) | 4 |
| Largeur | (m) | 1,0 | 0,4 | 0,5 | 0,5 |

Tableau (Suite)

|  | Fusion (1) | Gorge (8) | Affinage (2) | Condition. (3) |
|---|---|---|---|---|
| Hauteur de verre (m) | 0,75 | 0,10 (entrée) 0,08 (rétreint) 0,15 (sortie) | 0,85 | 0,2 |

Le seuil 13 représentant l'extrémité aval du compartiment d'affinage est immergé sous une épaisseur de verre de 0,10 m environ, ce qui laisse au courant de surface une section de passage de 0,05 m². 

Les électrodes de molybdène de la cuve d'affinage 14, au nombre de quatre et de diamètre 40 mm, immergées dans le verre fondu sur une longueur de 0,5 m, selon une disposition alternée du type représenté sur la figure 1, selon les cotes données ci-après, sont alimentées en courant triphasé en adoptant de préférence une même phase pour les deux électrodes 16 et 18, et les deux autres phases pour les électrodes 17 et 19.

La position des électrodes est définie dans le tableau ci-dessous par sa hauteur par rapport à la sole horizontale du compartiment 2 (ordonnée), et sa distance par rapport à la paroi verticale amont 9 (abscisse), exprimées en mètres :

| Electrodes | 16 | 17 | 18 | 19 |
|---|---|---|---|---|
| Abscisse (m) | 0,15 | 0,50 | 0,12 | 0,36 |
| Ordonnée (m) | 0,70 | 0,75 | 0,25 | 0,30 |

Le verre utilisé présente la composition suivante (en poids) :

| | |
|---|---|
| $SiO_2$ | 71,2 % |
| $Al_2O_3 + TiO_2$ | 1,04 " |
| $Fe_2O_3$ (fer total) | 0,08 " |
| CaO | 9,18 " |
| MgO | 4,49 " |
| $Na_2O$ | 13,3 " |
| $K_2O$ | 0,46 " |

le mélange vitrifiable étant constitué de matières verrières usuelles, et comprenant 20 % de calcin et 0,14 % de sulfate de sodium, par rapport au poids de verre à fondre, avec un taux d'humidité de 2 %.

Quelques valeurs de la viscosité de ce verre en fonction de la température sont indiquées ci-dessous, en log $\eta$ ($\eta$ en poises) :

| T (°C) | 997 | 1106 | 1202 | 1304 | 1407 |
|---|---|---|---|---|---|
| log $\eta$ | 4,16 | 3,41 | 2,89 | 2,43 | 2,07 |

Afin d'illustrer l'efficacité de la cellule d'affinage, on a établi une comparaison entre deux régimes de fonctionnement, les deux étant conduits avec une même tirée de 4 tonnes de verre par jour, et une même puissance dissipée dans le cubilot de fusion 1, le premier régime correspond, pour le compartiment d'affinage 2, à un simple maintien en température du verre extrait du cubilot 1, à 1 350 °C environ, et produisant un verre d'une qualité convenant à du beau flaconnage (125 bulles/dm³ de verre), le second régime, correspond à un apport d'énergie supplémentaire dans le compartiment d'affinage et y portant le verre à 1 500 °C, et produisant un verre de qualité d'affinage satisfaisant aux normes de la fabrication du verre flotté (moins de 2,5 bulles/dm³).

Pratiquement, le verre perdait tout d'abord environ 50 °C au long de la gorge 8, puis il était porté, lors de sa traversée du compartiment d'affinage, dans le premier régime de fonctionnement à 1 360 °C pour une puissance dissipée de 40 kW (avec une densité moyenne de courant sur les électrodes de 0,82 A/cm²), et dans le second régime à 1 510 °C pour une puissance dissipée de 61,5 kW (avec une densité moyenne de courant sur les électrodes de 1,23 A/cm²).

La distribution du courant aux diverses électrodes du compartiment d'affinage, dans les conditions correspondant au second régime de fonctionnement, s'établit sensiblement de la manière suivante :

| Electrodes (repères) | 16 | 18 | 17 | 19 |
|---|---|---|---|---|
| Intensités (A) | 460 | 500 | 650 | 710 |

correspondant à une puissance totale de 61,5 kW et à une impédance (Z) de 0,102 ohms.

On constate qu'un assez modeste complément d'énergie, d'environ 0,12 kWh/kg de verre, suffit à faire progresser de façon très considérable la qualité de l'affinage.

On observe en outre, bien que la profondeur de 0,2 m du canal de conditionnement ne permette qu'un très faible taux de recirculation, une bonne qualité d'homogénéité, très largement supérieure à celle qui est usuellement exigée pour le flaconnage de luxe, et de faibles niveaux de corrosion d'après l'analyse du verre obtenu (Mo 0,0032 %, $ZrO_2$ 0,066 %).

### Exemple 2

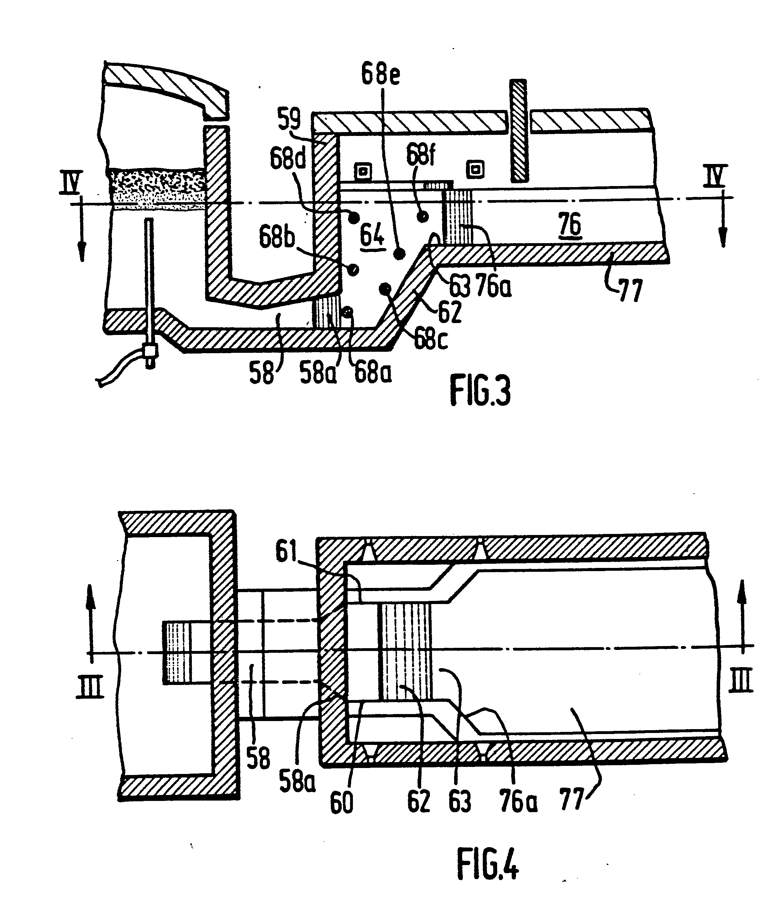

Le dispositif représenté par les figures 3 et 4 correspond à une installation de production journalière beaucoup plus importante que celle de l'exemple 1, à savoir de 120 à 150 t/jour, selon la qualité visée pour le produit livré.

Il comporte sensiblement les mêmes éléments principaux que le dispositif décrit à l'exemple 1, et l'attention sera donc surtout portée ici sur ses caractéristiques de structure les plus marquantes.

On notera tout d'abord que cette structure vise à réduire le plus possible les angles morts susceptibles de perturber l'écoulement du verre : la gorge 58 d'environ 0,8 m de largeur comporte à son débouché dans la trémie 64, au travers de sa paroi amont 59, un épanouissement 58a amenant sa largeur à égalité de celle de ladite trémie, de 1,2 m entre les parois latérales 60 et 61 et, de manière analogue, le raccordement 63 entre la trémie 64 et le canal 76 s'effectue par un nouvel épanouissement 76a, portant à 2 m la largeur disponible pour l'écoulement du flux de verre affiné dans le canal de conditionnement 76, dont la sole 77 comporte une pente ascendante vers l'aval, d'environ 2 cm/m.

La partie aval de cet épanouissement 76a correspond sensiblement à la limite de la zone la plus chaude du four, visant à l'affinage du verre.

A propos du nombre et de la disposition des électrodes 68a-68f, on observe que celles-ci, non représentées sur la figure 4 pour éviter de la surcharger, sont réparties de manière à intéresser les diverses veines du courant ascensionnel qui transite par la trémie 64, et, tout à la fois, à distribuer l'apport thermique sur quasiment toute la hauteur du verre, qui atteint 1,6 m, dans ladite trémie : on vise ainsi à maîtriser le mouvement et la température desdites veines et notamment à éviter tout notable courant de retour.

On remarque à cet égard que cet apport thermique est initié par l'électrode 68a, située sensiblement dans la zone médiane du flux de matière fondue s'échappant de la gorge 58.

Les dimensions d'une telle installation sont fort réduites en comparaison de celle d'une installation traditionnelle. Dans le cas présent, la surface totale de l'ensemble des deux compartiments d'affinage et de conditionnement n'atteint pas 20 m², alors qu'il est de l'ordre de 200 m² dans un four classique de même capacité de production.

Le courant de recirculation, pour une profondeur moyenne préférée de 0,6 m du compartiment de conditionnement 76, est de préférence réglé à environ 1 fois, ou même abaissé à 0,5 fois le courant de tirée, tout en conservant une qualité d'homogénéité compatible avec la production de verre flotté.

Des agitateurs peuvent avantageusement être utilisés à cet effet, placés dans le premier tiers amont du compartiment de conditionnement, et plongeant de préférence à moins du tiers de la hauteur de verre.

Il en résulte une souplesse de fonctionnement et une rapidité de réponse très améliorée : 90 % de l'effet à attendre d'un « signal » donné, changement de composition en particulier, est obtenu en une dizaine d'heures, au lieu de 8 à 10 jours dans un four traditionnel.

L'efficacité de la cellule d'affinage n'est pas sensiblement affectée par l'augmentation d'échelle existant entre les dispositifs des exemples 1 et 2, car on obtient, par la mise en œuvre de l'échauffement, caractéristique de l'invention, du verre parcourant la trémie d'affinage, une réduction du nombre des bulles d'un coefficient 100 au moins.

### Revendications

1. Dispositif d'élaboration de verre affiné selon une fabrication continue, comprenant un compartiment de fusion (1) comportant des moyens de chauffage (4) pour la fusion d'une charge vitrifiable (6) et une cuve dite de fusion pour contenir le bain (7) de matériau vitreux fondu obtenu, un compartiment d'affinage (2) comportant une cuve en forme de cheminée ou de trémie (14, 64) constituant un conduit sensiblement vertical, une gorge immergée (8, 58), reliant le niveau inférieur (5) de ladite cuve de fusion (1) au niveau inférieur (2b) dudit conduit vertical (14, 64), par laquelle ledit matériau vitreux fondu (7) provenant de ladite cuve de fusion (1) est délivré dans ledit conduit (14, 64), et des moyens d'extraction (13, 26, 25, 63, 76) pour prélever ledit matériau fondu vitreux au niveau supérieur (2a) dudit conduit vertical (14, 64), ledit compartiment d'affinage (2) étant muni d'électrodes immergées de chauffage (16-19) pour amener à la température usuelle de débullage ledit matériau vitreux fondu parvenant au niveau supérieur du bain dans ledit conduit vertical (14, 64), caractérisé en ce que lesdites électrodes immergées de chauffage dudit compartiment d'affinage (2) sont munis de moyens de réglage de leur puissance de chauffe et présentent une dissémination dans le volume dudit compartiment d'affinage (2) tels qu'ils

9

# 0 133 409

permettent d'assurer une élévation homogène et progressive de la température du matériau fondu contenu dans ledit conduit vertical (16, 64) depuis son niveau inférieur (2b) jusqu'à son niveau supérieur (2a), provoquant un mouvement ascensionnel d'ensemble dudit matériau sur ce parcours, excluant tout courant descendant de retour, ladite puissance de chauffe desdites électrodes immergées de chauffage permettant d'imposer, au débit de production visé, un échauffement d'au moins 100 °C du matériau fondu pour accéder à ladite température de débullage, et en ce que lesdits moyens d'extraction (13, 26, 25, 63, 76) comportent une liaison présentant au raccordement (13, 63) avec le compartiment d'affinage (2), pour le passage du verre extrait, un étranglement de section verticale transversale du flux de verre de valeur inférieure à celle de la section horizontale dudit conduit vertical (14, 64) à son niveau supérieur (2a).

2. Dispositif selon la revendication précédente, caractérisé en ce que la hauteur dudit conduit vertical (14, 64) est au moins égale à la racine carrée de l'aire de sa section horizontale supérieure (2a).

3. Dispositif selon l'une quelconque des revendications 1 et 2, caractérisé en ce que ledit conduit vertical (14, 64) présente une forme de trémie évasée vers le haut comprenant une paroi aval (12, 62) plane et inclinée vers l'aval, sa pente étant de préférence comprise entre 50 et 80°, des parois latérales (10, 11, 60, 61), sensiblement verticales, parallèles au plan vertical longitudinal de symétrie de la cuve, une paroi amont (9, 59) verticale orthogonale à ce plan.

4. Dispositif selon l'une des revendications précédentes, caractérisé en ce que la gorge (8, 58) présente une section verticale transversale de sortie inférieure à la section horizontale de la base (2b) dudit conduit vertical (14, 64), elle-même étant au moins égale à 30 % de la section horizontale de sa partie supérieure (2a).

5. Dispositif selon l'une des revendications précédentes, caractérisé en ce que la section offerte au flux de verre dans un canal de conditionnement (26, 76) est supérieure d'au moins 20 % à la section offerte audit flux au début de la liaison (13, 63) entre le conduit vertical (14, 64) et ledit canal (26, 76) du compartiment de conditionnement (3).

6. Dispositif selon la revendication 5, caractérisé en ce qu'un seuil en réfractaire (13) est prévu à la liaison entre le conduit vertical (14) et le canal de conditionnement (26), réduisant la section verticale transversale de passage du verre à son niveau de 20 à 60 % de la section maximale offerte au bain dans le canal de conditionnement (26).

7. Dispositif selon l'une des revendications 5 et 6, caractérisé en ce qu'un écran (15) cloisonne l'atmosphère entre les compartiments d'affinage (2) et de conditionnement (3).

8. Dispositif selon l'une des revendications 1 à 7, caractérisé en ce que lesdits moyens de chauffage du compartiment d'affinage comprennent des électrodes (16-19, 68a-68f) immergées dans le bain, chauffant la matière par effet Joule direct.

9. Dispositif selon la revendication 8, caractérisé en ce que le conduit vertical (14, 64) comporte des électrodes (16-19, 68a-68f) disposées horizontalement, leur partie active s'étendant de préférence d'une paroi latérale à l'autre (10-11, 60-61) dudit conduit (14, 64).

10. Dispositif selon la revendication 8, caractérisé en ce que le conduit vertical (14, 64) comporte des électrodes horizontales pénétrant dans la cuve au travers de la paroi aval (12, 62).

11. Dispositif selon la revendication 8, caractérisé en ce que le conduit vertical (14, 64) comporte des électrodes verticales traversant la sole (2b).

12. Dispositif selon l'une des revendications 8 à 11, caractérisé en ce que des brûleurs (20-21) sont disposés dans le compartiment d'affinage (2).

13. Dispositif selon l'une des revendications 8 à 12, caractérisé en ce que des brûleurs sont disposés dans le compartiment de conditionnement (3).

14. Dispositif selon l'une des revendications 5 à 13, caractérisé en ce que des agitateurs sont disposés dans la moitié amont du canal de conditionnement (26, 76).

15. Dispositif selon l'une des revendications 5 à 14, caractérisé en ce que le canal (76) possède une profondeur moyenne comprise entre 0,4 et 0,8 m, et de préférence encore 0,5 et 0,7 m, sa longueur étant de préférence au moins égale à trois fois sa largeur.

16. Dispositif selon l'une des revendications 5 à 15, caractérisé en ce que ledit canal (76) présente une sole (77) de pente ascendante de l'amont vers l'aval, la profondeur du verre à chaque extrémité restant de préférence comprise entre 0,4 et 0,8 m.

17. Dispositif selon l'une des revendications 5 à 16, caractérisé par un canal (76) de 0,6 m de profondeur moyenne.

18. Dispositif selon l'une quelconque des revendications précédentes, caractérisé en ce que lesdits moyens de chauffage (16-19, 68a-68f) dudit conduit vertical comprennent au moins un organe de chauffage (68a) dissipant de l'énergie dans une zone transversale horizontale médiane, proche du débouché de la gorge (58) du flux de matière qui s'en échappe.

19. Dispositif selon l'une quelconque des revendications précédentes, caractérisé en ce que lesdits moyens de chauffage (16-19, 68a-68f) comprennent au moins un organe (16, 18, 68b, 68d) dissipant de l'énergie à proximité de la paroi amont (9, 59) dudit conduit vertical (14, 64), la puissance dissipée et la distance de la paroi étant telles que soit rendu négligeable le courant dit « de paroi froide » descendant le long de ladite paroi.

20. Dispositif selon l'une des revendications précédentes, caractérisé en ce que le compartiment de fusion (1) comporte une cuve chauffée électriquement, de type cubilot, fonctionnant de préférence à « voûte froide », c'est-à-dire sous une couche continue de mélange vitrifiable (6).

21. Procédé d'élaboration de verre affiné selon une fabrication continue comprenant une phase dite de fusion, formant un bain d'un matériau vitreux (7), par fusion d'une charge vitrifiable (6) dans une chambre de fusion (1), une phase d'affinage, visant un débullage dudit matériau vitreux, se situant essentiellement dans une chambre d'affinage (2) comprenant un conduit vertical (14, 64), ledit matériau vitreux fondu étant transféré par pression hydrostatique de ladite chambre de fusion (1) à ladite chambre d'affinage (2) par une gorge immergée (8, 58) reliant un niveau inférieur du bain de ladite chambre de fusion (1) à un niveau inférieur du bain de ladite chambre d'affinage (2), puis soumis dans ladite chambre (2) à un échauffement provoquant un mouvement ascendant dudit matériau et le portant à une température permettant son débullage par la surface libre surmontant le bain de ladite chambre d'affinage (2) et une phase d'extraction du verre affiné par une liaison horizontale (13, 63) menant de la chambre d'affinage (2) vers une chambre de conditionnement (26, 76) par prélèvement à la partie supérieure du bain contenu dans ladite chambre d'affinage (2), caractérisé en ce que ledit échauffement appliqué au bain contenu dans ladite chambre d'affinage est apporté en des zones disséminées dans le volume du bain et en des puissances réglées de manière à assurer une élévation homogène et progressive de la température dudit matériau fondu (7) depuis le niveau inférieur (2b) jusqu'au niveau supérieur (2a) dudit conduit vertical (14, 64) et à provoquer un mouvement ascensionnel d'ensemble du matériau fondu sur ce parcours, en un flux continu vertical excluant tout courant descendant en retour, ladite élévation de température étant d'au moins 100 °C jusqu'à ladite température de débullage correspondant de préférence à une viscosité d'au plus 5 Pa.s (50 poises), ledit flux étant ensuite dévié en un courant de surface en direction de ladite chambre de conditionnement (26, 76), la vitesse du flux de matériau vitreux affiné étant, au niveau de ladite liaison (13, 63), supérieure à la vitesse dudit flux vertical lors de son mouvement ascensionnel dans ledit conduit vertical (14, 64), puis décroissante au-delà.

22. Procédé selon la revendication 21, caractérisé en ce que ledit flux vertical possède une vitesse ascensionnelle plus faible en partie haute qu'en partie basse de la chambre d'affinage (2).

23. Procédé selon l'une des revendications 21 et 22, caractérisé en ce que le prélèvement de verre effectué par le courant de surface provenant de la chambre d'affinage (2) qui alimente la chambre de conditionnement (26, 76) y est homogénéisé par une courroie de recirculation et refroidi à une température favorable au formage.

24. Procédé selon la revendication 23, caractérisé en ce que la vitesse du flux de matière au niveau de la liaison horizontale entre la chambre d'affinage (2) et la chambre de conditionnement (26, 76) est supérieure à la vitesse du flux du courant de surface de ladite courroie thermique d'homogénéisation par recirculation.

25. Procédé selon l'une des revendications 23 et 24, caractérisé en ce que le courant inférieur de ladite courroie thermique d'homogénéisation, dirigé vers l'amont, ou courant de recirculation, présente un débit moyen de 0,5 à 3 fois le débit de la tirée du verre extrait, et de préférence de l'ordre de 1 fois ce débit de tirée.

26. Procédé selon l'une des revendications 21 à 25, caractérisé en ce que ledit échauffement de la masse en fusion prend place, pour sa plus grande part, au cours de son mouvement ascensionnel d'ensemble.

27. Procédé selon l'une des revendications 21 à 26, caractérisé en ce que l'échauffement de la masse en fusion est initié, au niveau de son admission dans la zone d'affinage, dans une zone horizontale médiane dudit flux.

28. Procédé selon l'une des revendications 21 à 27, caractérisé en ce que l'échauffement de la masse en fusion est obtenu par effet Joule direct entre des électrodes immergées dans le bain.

29. Procédé selon l'une des revendications 21 à 28, caractérisé en ce que, en vue de son application à une charge vitrifiable contenant au moins un agent affinant, ledit échauffement de la masse en fusion, au cours de sa traversée de la zone d'affinage, s'effectue d'un niveau inférieur à la température de décomposition de l'agent affinant à un niveau auquel une notable partie de l'agent affinant est décomposée.

30. Procédé selon l'une des revendications 21 à 29, caractérisé en ce que, en vue de son application à la fabrication de verres silico-sodo-calciques industriels usuels, contenant de 68 à 74 % de $SiO_2$, de 0 à 3 % de $Al_2O_3$, de 12 à 15 % de $Na_2O$, de 8 à 12 % de $CaO$, la charge vitrifiable apportant ces éléments contient des sulfates en quantité correspondant à au moins 0,1 % de $SO_3$, et l'échauffement de la masse en fusion au cours de sa traversée de la zone d'affinage recouvre de préférence au moins le domaine de température compris entre 1 370 et 1 480 °C, un refroidissement de la masse en fusion étant éventuellement effectué à cet effet durant son transfert entre la zone de fusion et la zone d'affinage.

## Claims

1. Apparatus for making refined glass in a continuous process, comprising a fusion compartment (1) comprising heating means (4) for fusing a vitrifiable charge (6) and a vessel called a « fusion vessel » for containing the bath (7) of molten vitreous material obtained, a refining compartment (2) comprising a vessel in the form of a shaft or funnel (14, 64) forming a substantially vertical duct, an immersed throat (8, 58), connecting the lower level (5) of said fusion vessel (1) to the lower level (2b) of said vertical duct (14, 64), by which said molten vitreous material (7) from said fusion vessel (1) is delivered to said duct (14, 64), and extraction means (13, 26, 25, 63, 76) to extract said molten vitreous material at an upper level (2a) of said vertical duct (14, 64), said refining compartment (2) being provided with immersed electrodes (16-19, 21-21') to bring said molten vitreous material from the upper level of the bath in said vertical duct (14, 64) to the usual temperature for degassing, characterised in that said immersed electrodes for heating said refining compartment (2) are provided with means for regulating their heating power and give a dissemination in the volume of said refining compartment (2) such that they allow homogeneous and progressive increase of the temperature of the molten material contained in said vertical duct (16, 64) from its lower level (2b) to its upper level (2a), causing ascending movement of the whole of said material in its path of travel, with no descending return flow, said heating power of said immersed electrodes allowing application, at the intended production rate, of a heating of at least 100 °C of the molten material to reach said degassing temperature, and in that said extraction means (13, 26, 25, 63, 76) comprise a connection giving the link (13, 63) with the refining compartment (2), for passage of the glass removed, a constriction of vertical section transverse to the flow of glass of value less than that of the horizontal section of said vertical duct (14, 64) at its upper level (2a).

2. Apparatus according to the preceding claim, characterised in that the height of said vertical duct (14, 64) is at least equal to the square root of the area of the upper horizontal section (2a).

3. Apparatus according to claim 1 or 2, characterised in that said vertical duct (14, 64) has the shape of an upwardly widening funnel comprising a flat downstream wall (12, 62) inclined downstream, its gradient preferably being from 50 to 80°, substantially vertical lateral walls (10, 11, 60, 61), parallel to the longitudinal vertical plane of symmetry of the vessel, and a vertical upstream wall (9, 59) orthogonal to this plane.

4. Apparatus according to any one of the preceding claims, characterised in that the throat (8, 58) has a transverse vertical outlet cross-section less than the horizontal cross-section of the base (2b) of said vertical duct (14, 64), itself being at least equal to 30 % of the horizontal section of its upper part (2a).

5. Apparatus according to any one of the preceding claims, characterised in that the section offered to the glass flow in a holding channel (26, 76) is greater by at least 20 % than the section offered to said flow at the start of the link (13, 63) between the vertical duct (14, 64) and said channel (26, 76) of a holding compartment (3).

6. Apparatus according to claim 5, characterised in that a weir of refractory (13) is provided at the connection between the vertical duct (14) and the holding channel (26), reducing the transverse vertical section of passage of the glass at its level by 20 to 60 % of the maximum section offered to the bath in the holding channel (26).

7. Apparatus according to claim 5 or 6, characterised in that a screen (15) divides the atmosphere between the refining (2) and holding (3) compartments.

8. Apparatus according to any one of claims 1 to 7, characterised in that said heating means for the refining compartment comprises electrodes (16-19, 68a-68f) immersed in the bath, heating the material by the direct Joule effect.

9. Apparatus according to claim 8, characterised in that the vertical duct (14, 64) comprises electrodes (16-19, 68a-68f) arranged horizontally, their active part extending preferably from one lateral wall to the other (10-11, 60-61) of said duct (14, 64).

10. Apparatus according to claim 8 characterised in that the vertical duct (14, 64) comprises horizontal electrodes entering the vessel through the downstream wall (12, 62).

11. Apparatus according to claim 8, characterised in that the vertical duct (14, 64) comprises vertical electrodes passing through the bottom (2b).

12. Apparatus according to any one of claims 8 to 11, characterised in that burners (20-21) are arranged in the refining compartment (2).

13. Apparatus according to any one of claims 8 to 12, characterised in that burners are arranged in the holding compartment (3).

14. Apparatus according to any one of claims 5 to 13, characterised in that agitators are arranged in the upstream half of the holding channel (26, 76).

15. Apparatus according to any one of claims 5 to 14, characterised in that the channel (76) has an average depth from 0.4 o 0.8 mt preferably from 0.5 to 0.7 m, its length preferably being at least three times its width.

16. Apparatus according to any one of claims 5 to 15, characterised in that said channel (76) has a bottom (77) having a slope ascending from upstream to downstream, the depth of glass at each end preferably being from 0.4 to 0.8 m.

17. Apparatus according to any one of claims 5 to 16, characterised by a channel (76) of average depth 0.6 m.

18. Apparatus according to any one of the preceding claims, characterised in that said heating means (16-19, 68a-68f) of said vertical duct comprise at least one heating member (68a) dissipating energy in a median horizontal transverse zone, close to the discharge of the throat (58) of the flow of material which is delivered.

19. Apparatus according to any one of the preceding claims, characterised in that said heating means (16-19, 68a-68f) comprise at least one member (16, 18, 68b, 68d) dissipating energy in the proximity of the upstream wall (9, 59) of said vertical duct (14, 64), the power dissipated and the distance from the wall being such that the current called « cold wall current » descending along said wall is rendered negligible.

20. Apparatus according to any one of the preceding claims, characterised in that the fusion compartment (1) comprises an electrically heated vessel, of the cupola type, preferably operating in the « cold vault » manner, that is to say below a continuous layer of vitrifiable mixture (6).

21. A method of making refined glass in a continuous process, comprising a phase called a « fusion phase », forming a bath of a vitreous material (7), by fusion of a vitrifiable charge (6) in a fusion chamber (1), a refining phase, intended for degassing of vitreous material situated essentially in a refining chamber (2) comprising a vertical duct (14, 64), said molten vitreous material being transferred by hydrostatic pressure from said fusion chamber (1) to said refining chamber (2) by an immersed throat (8, 58) connecting a lower level of the bath in said fusion chamber (1) to a lower level of the bath in said refining chamber (2), and subjected in said chamber (2) to heating causing an ascending movement of said material and bringing it to a temperature allowing its degassing by the free surface above the bath in said refining chamber (2), and a phase of extraction of refined glass by a horizontal connection (13, 63) leading from the refining chamber (2) to a holding chamber (26, 76) by withdrawal at the upper part of the bath contained in said refining chamber (2), characterised in that said heating applied to the bath contained in said refining chamber is applied to zones distributed in the volume of the bath at powers adjusted so as to ensure a homogeneous, progressive rise in temperature of said molten material (7) from the lower level (2b) to the upper level (2a) of said vertical duct (14, 64) and to cause an ascending movement of the whole of the molten material in its path of travel in a continuous vertical flow with no descending return flow, said rise in temperature being of at least 100 °C to said degassing temperature, preferably corresponding to a viscosity not exceeding 5 Pa.s (50 poises), said flow then being deflected as a surface current in the direction of said holding chamber (26, 76), the speed of flow of refined vitreous material being, at the level of said connection (13, 63), greater than the speed of said vertical flow during its ascending movement in said vertical duct (14, 64), and then decreasing.

22. A method according to claim 21, characterised in that said vertical flow has a speed of ascent which is less at the upper part than the lower part of the refining chamber (2).

23. A method according to claim 21 or 22, characterised in that the glass withdrawn as the surface current from the refining chamber (2) which feeds the holding chamber (26, 76) is homogenised there by a recirculation current and cooled to a temperature suitable for forming.

24. A method according to claim 23, characterised in that the speed of flow of material at the level of the horizontal connection between the refining chamber (2) and the holding chamber (26, 76) is greater than the speed of flow of the surface current of said homogenising thermal recirculation current.

25. A method according to claim 23 or 24, characterised in that the lower current of said homogenising thermal current, directed upwardly, or recirculation current, has an average rate from 0.5 to 3 times the rate of withdrawal of the withdrawn glass, preferably of the order of 1 times the withdrawal rate.

26. A method according to any one of claims 21 to 25, characterised in that said heating of the mass in fusion takes place predominantly during ascending movement of the whole mass.

27. A method according to any one of claims 21 to 26, characterised in that heating of the mass in fusion is initiated, at the level of its admission to the refining zone, in a middle horizontal zone of the flow.

28. A method according to any one of claims 21 to 27, characterised in that heating of the mass in fusion is obtained by the direct Joule effect between electrodes immersed in the bath.

29. A method according to any one of claims 1 to 28, characterised in that, for its application to a vitrifiable charge containing at least one refining agent, said heating of the mass in fusion during its travel through the refining zone, is carried out from a level less than the decomposition temperature of the refining agent to a level less than the decomposition temperature of the refining agent to a level at which a considerable part of the refining agent is decomposed.

30. A material according to any one of claims 21 to 29, characterised in that for its application to manufacture to the usual silico-soda-calcia industrial glasses, containing 68 to 74 % of $SiO_2$, O to 3 % of $Al_2O_3$, 12 to 15 % of $Na_2O$ and 8 to 12 % of CaO, the vitrifiable charge providing these elements containing sulphates in an amount corresponding to at least 0,1 % of $SO_3$, and the heating of the mass in fusion during its passage through the refining zone preferably covers at least the temperature range from 1370 to 1480 °C, cooling of the mass in fusion being possibly carried out for this purpose during its transfer between the fusion zone and the refining zone.

**Patentansprüche**

1. Vorrichtung zum kontinuierlichen Erschmelzen von geläutertem Glas mit einem Schmelzabteil (1), einschließend Heizeinrichtungen (4) zum Schmelzen einer verglasbaren Ladung (6) und eine Schmelzwanne zur Aufnahme des Bades (7) der erhaltenen Glasschmelze, ein Läuterungsabteil (2), einschließend eine Wanne in Schacht- oder Bunkerform (14, 64), die einen im wesentlichen vertikalen Kanal bildet, einen versenkten Durchlaß (8, 58), der das untere Niveau (5) der Schmelzwanne (1) mit dem unteren Niveau (2b) des vertikalen Kanals (14, 64) verbindet, durch den das geschmolzene Glasmaterial (7) aus der Schmelzwanne (1) in den genannten Kanal (14, 64) gelangt und mit einer Entnahmeeinrichtung (13, 26, 25, 63, 76), um das geschmolzene Glasmaterial am oberen Niveau (2a) des vertikalen Kanals (14, 64) zu entnehmen, wobei das Läuterungsabteil (2) mit eingetauchten Heizelektroden (16, 19) versehen ist, um die Glasschmelze, die zum höheren Niveau des Bades in dem genannten vertikalen Kanal (14, 64) gelangt ist, auf die übliche Siedetemperatur zu bringen, dadurch gekennzeichnet, daß die genannten eingetauchten Heizelektroden des Läuterungsabteils (2) mit einer Einrichtung zum Regeln ihrer Heizleistung versehen sind und eine Ausbreitung in dem Volumen des genannten Läuterungsabteils (2) bewirken, so daß sie eine homogene und fortschreitende Steigerung der Temperatur des geschmolzenen Materials gestatten, das in dem genannten vertikalen Kanal (16, 64) enthalten ist, vom unteren Niveau (2b) bis zum oberen Niveau (2a), was eine ansteigende Bewegung des gesamten genannten Materials auf diesem Wege unter Ausschluß einer absteigenden Rückströmung bewirkt, wobei die Heizleistung der eingetauchten Heizelektroden es gestattet, bei der vorgesehenen Produktionsleistung das geschmolzene Material um mindestens 100 °C aufzuheizen, um die genannte Siedetemperatur zu erreichen und daß die Entnahmeeinrichtung (13, 26, 25, 63, 76) eine Verbindung einschließt, die an der Verbindungsstelle (13, 63) mit dem Läuterungsabteil (2) für den Durchgang des entnommenen Glases eine Verengung des vertikalen Querschnittes des Glasflusses darstellt, dessen Wert geringer ist als der des Horizontalquerschnittes des genannten vertikalen Kanals (14, 64) an seinem oberen Niveau (2a).

2. Vorrichtung nach dem vorhergehenden Anspruch, dadurch gekennzeichnet, daß die Höhe des vertikalen Kanals (14, 64) mindestens gleich der Quadratwurzel der Fläche seines oberen horizontalen Abschnittes (2a) ist.

3. Vorrichtung nach einem der Ansprüche 1 und 2, dadurch gekennzeichnet, daß der genannte vertikale Kanal (14, 64) die Form eines sich nach oben erweiternden Schachtes hat, umfassend eine stromabwärts gelegene Seitenwand (12, 62), die eben und stromabwärts geneigt ist, wobei die Schräge vorzugsweise zwischen 50 und 80° umfaßt, der Schacht weiter Seitenwände (10, 11 ; 60, 61) umfaßt, die im wesentlichen vertikal und parallel zur vertikalen Symmetrieebene der Wanne verlaufen, sowie eine stromaufwärts gelegene Seitenwand (9, 59), die vertikal orthogonal zu dieser Ebene liegt.

4. Vorrichtung nach einem der vorhergehenden Ansprüche, dadurch gekennzeichnet, daß der Durchlaß (8, 58) einen vertikalen Ausgangsquerschnitt aufweist, der geringer ist als der Horizontalschnitt am Boden (2b) des vertikalen Kanals (14, 64), der selbst mindestens 30 % des Horizontalschnittes seines oberen Abschnittes (2a) beträgt.

5. Vorrichtung nach einem der vorhergehenden Ansprüche, dadurch gekennzeichnet, daß der dem Glasfluß im Konditionierungskanal (26, 76) gebotene Querschnitt größer ist als mindestens 20 % des Querschnittes, der diesem Fluß am Beginn der Verbindung (13, 63) zwischen dem vertikalen Kanal (14, 64) und dem genannten Kanal (26, 76) des Konditionierungsabteils (3) zur Verfügung steht.

6. Vorrichtung nach Anspruch 5, dadurch gekennzeichnet, daß eine hitzebeständige Schwelle (13) an der Verbindung zwischen dem vertikalen Kanal (14) und dem Konditionierungskanal (26) vorgesehen ist, die den Vertikalquerschnitt des Glasdurchganges auf seinem Niveau von 20 bis 60 % des Maximalquerschnittes vermindert, der dem Bad im Konditionierungskanal (26) geboten ist.

7. Vorrichtung nach einem der Ansprüche 5 und 6, dadurch gekennzeichnet, daß ein Schirm (15) die Atmosphäre zwischen dem Läuterungs (2)- und dem Konditionierungsabteil (3) trennt.

8. Vorrichtung nach einem der Ansprüche 1 bis 7, dadurch gekennzeichnet, daß die Heizeinrichtung des Läuterungsabteils Elektroden (16-19 ; 68a-68f) umfaßt, die in das Bad eingetaucht sind und das Material durch direkten Joule-Effekt erhitzen.

9. Vorrichtung nach Anspruch 8, dadurch gekennzeichnet, daß der vertikale Kanal (14, 64) Elektroden (16-19, 68a-68f) einschließt, die horizontal angeordnet sind, wobei sich ihr aktiver Abschnitt vorzugsweise von einer Seitenwand zur anderen (10-11 ; 60-61) des genannten Kanals (14, 64) erstreckt.

10. Vorrichtung nach Anspruch 8, dadurch gekennzeichnet, daß der vertikale Kanal (14, 64) horizontale Elektroden umfaßt, die durch die stromabwärts gelegene Seitenwand (12, 62) in die Wanne eintreten.

11. Vorrichtung nach Anspruch 8, dadurch gekennzeichnet, daß der vertikale Kanal (14, 64) vertikale Elektroden umfaßt, die den Boden (2b) durchdringen.

12. Vorrichtung nach einem der Ansprüche 8 bis 11, dadurch gekennzeichnet, daß Brenner (20-21) im Läuterungsabteil (2) angeordnet sind.

13. Vorrichtung nach einem der Ansprüche 8 bis 12, dadurch gekennzeichnet, daß Brenner im Konditionierungsabteil (3) angeordnet sind.

14. Vorrichtung nach einem der Ansprüche 5 bis 13, dadurch gekennzeichnet, daß Rührer im Stromaufwärts gelegenen Teil des Konditionierungskanals (26, 76) angeordnet sind.

15. Vorrichtung nach einem der Ansprüche 5 bis 14, dadurch gekennzeichnet, daß der Kanal (76) eine mittlere Tiefe zwischen 0,4 und 0,8 m, vorzugsweise zwischen 0,5 und 0,7 m aufweist und seine Länge vorzugsweise mindestens gleich dem Dreifachen seiner Breite ist.

16. Vorrichtung nach einem der Ansprüche 5 bis 15, dadurch gekennzeichnet, daß der Kanal (76) einen Boden (77) aufweist, der von stromaufwärts nach stromabwärts ansteigt, wobei die Glastiefe an jedem Ende vorzugsweise zwischen 0,4 und 0,8 m liegt.

17. Vorrichtung nach einem der Ansprüche 5 bis 16, dadurch gekennzeichnet, daß der Kanal (76) eine mittlere Tiefe von 0,6 m aufweist.

18. Vorrichtung nach einem der vorhergehenden Ansprüche, dadurch gekennzeichnet, daß die Heizeinrichtung (16-19 ; 68a-68f) des vertikalen Kanals mindestens ein Heizorgan (68a) umfaßt, das Energie in einer mittleren horizontalen Querzone abgibt, die nahe der Mündung des Durchlasses (58) des Materialflusses liegt, der daraus ausfließt.

19. Vorrichtung nach einem der vorhergehenden Ansprüche, dadurch gekennzeichnet, daß die genannte Heizeinrichtung (16-19 ; 68a-68f) mindestens ein Organ (16, 18 ; 68b, 68d) umfaßt, das Energie in der Nähe der stromaufwärts gelegenen Seitenwand (9, 59) des vertikalen Kanals (14, 64) abgibt, wobei die abgegebene Leistung und der Abstand der Seitenwand derart sind, daß der Strom, der längs dieser « kalten Seitenwand » absinkt vernachlässigbar ist.

20. Vorrichtung nach einem der vorhergehenden Ansprüche, dadurch gekennzeichnet, daß das Schmelzabteil (1) eine elektrisch geheizte Wanne nach Art eines Kupolofens einschließt, die vorzugsweise bei « kaltem Deckel » arbeitet, d. h. unter einer zusammenhängenden Schicht der verglasbaren Mischung (6).

21. Verfahren zum kontinuierlichen Erschmelzen von geläutertem Glas umfassend eine Schmelzphase, bei dem ein Bad eines Glasmaterials (7) durch Schmelzen einer verglasbaren Ladung (6) in einer Schmelzkammer (1) gebildet wird, eine Läuterungsphase, die ein Sieden des Glasmaterials anstrebt, das sich im wesentlichen in einer Läuterungskammer (2) befindet, die einen vertikalen Kanal (14, 64) umfaßt, wobei das geschmolzene Glasmaterial durch hydrostatischen Druck der Schmelzkammer (1) in die Läuterungskammer (2) durch einen versenkten Durchlaß (8, 58) übertragen wird, der das untere Niveau des Bades der Schmelzkammer (1) mit dem unteren Niveau des Bades der Läuterungskammer (2) verbindet, man dann die Kammer (2) aufheizt, was zu einer aufsteigenden Bewegung des Materials führt und es auf eine Temperatur bringt, die sein Sieden durch die freie Oberfläche, die das Bad der Läuterungskammer (2) erhöht, gestattet und eine Entnahmephase des geläuterten Glases durch eine horizontale Verbindung (13, 63), die von der Läuterungskammer (2) zu einer Konditionierungskammer (26, 76) führt, durch Entnahme am oberen Teil des in der Läuterungskammer (2) enthaltenen Bades, dadurch gekennzeichnet, daß das Erhitzen des in der Läuterungskammer enthaltenen Bades in Zonen erfolgt, die im Badvolumen verteilt sind und mit einer Leistung, die so geregelt ist, daß eine homogene und fortschreitende Erhöhung der Temperatur des geschmolzenen Materials (7) vom unteren Niveau (2b) bis zum oberen Niveau (2a) des vertikalen Kanals (14, 64) sichergestellt ist und um eine ansteigende Bewegung des gesamten geschmolzenen Materials auf diesem Wege in einem kontinuierlichen vertikalen Fluß unter Ausschluß einer absteigenden Rückströmung zu bewirken, wobei die genannte Temperaturerhöhung mindestens 100 °C bis zu der genannten Siedetemperatur beträgt, die vorzugsweise einer Viskosität von höchstens 5 Pa.s (50 Poises) entspricht, wobei dieser Fluß in einen Oberflächenstrom in Richtung der Konditioniertungskammer (26, 76) verschoben wird, wobei die Geschwindigkeit des Flusses des geläuterten Glasmaterials auf der Höhe der genannten Verbindung (13, 63) größer ist, als die Geschwindigkeit des Vertikalflusses während seiner aufsteigenden Bewegung im vertikalen Kanal (14, 64) und von dort an abnimmt.

22. Verfahren nach Anspruch 21, dadurch gekennzeichnet, daß der vertikale Fluß eine aufsteigende Geschwindigkeit aufweist, die im oberen Teil geringer ist als im unteren Teil der Läuterungskammer (2).

23. Verfahren nach einem der Ansprüche 21 und 22, dadurch gekennzeichnet, daß die Entnahme des Glases, die durch den Oberflächenstrom erfolgt, der aus der Läuterungskammer (2) stammt und die Konditionierungskammer (26, 76) versorgt, dort durch ein Rezirkulationsband homogenisiert und auf eine für das Formen günstige Temperatur gekühlt wird.

24. Verfahren nach Anspruch 23, dadurch gekennzeichnet, daß die Flußgeschwindigkeit des Materials auf der Höhe der Horizontalverbindung zwischen der Läuterungskammer (2) und der Konditionierungskammer (26, 76) größer ist als die Flußgeschwindigkeit des Oberflächenstromes des genannten thermischen Bandes der Homogenisierung durch Rezirkulation.

25. Verfahren nach einem der Ansprüche 23 und 24, dadurch gekennzeichnet, daß der innere Strom des genannten thermischen Bandes der Homogenisation, der stromaufwärts gerichtet ist, oder der Rezirkulationsstrom, einen mittleren Durchsatz vom 0,5- bis zum 3-fachen des Durchsatzes beim Ziehen des entnommenen Glases darstellt, und vorzugsweise liegt er in der Größenordnung des 1-fachen des Durchsatzes beim Ziehen.

26. Verfahren nach einem der Ansprüche 21 bis 25, dadurch gekennzeichnet, daß das Erhitzen der Masse beim Schmelzen zum größten Teil während ihrer Aufwärtsbewegung stattfindet.

27. Verfahren nach einem der Ansprüche 21 bis 26, dadurch gekennzeichnet, daß das Erhitzen der Masse beim Schmelzen in der Höhe ihres Zuganges in die Läuterungszone in einer mittleren horizontalen Zone des genannten Flusses initiiert wird.

28. Verfahren nach einem der Ansprüche 21 bis 27, dadurch gekennzeichnet, daß das Erhitzen der Masse beim Schmelzen durch direkten Joule-Effekt zwischen den in das Bad eingetauchten Elektroden erfolgt.

29. Verfahren nach einem der Ansprüche 21 bis 28, dadurch gekennzeichnet, daß bei der Anwendung auf eine verglasbare Ladung, die mindestens ein Läuterungsmittel enthält, das Erhitzen der Masse beim Schmelzen während sie die Läuterungszone durchquert, von einer Höhe, die unterhalb der Zersetzungstemperatur des Läuterungsmittels liegt bis zu einer Höhe erfolgt, bei der ein merklicher Teil des Läuterungsmittels zersetzt wird.

30. Verfahren nach einem der Ansprüche 21 bis 29, dadurch gekennzeichnet, daß bei seiner Anwendung auf die Herstellung von üblichen industriellen Natrium-Kalzium-Silikatgläsern, die 68 bis 74 % $SiO_2$, 0 bis 3 % $Al_2O_3$, 12 bis 15% $Na_2O$, 8 bis 12% CaO enthalten, die diese Elemente beisteuernde verglasbare Ladung Sulfate in einer Menge entsprechend mindestens 0,1 % $SO_3$ enthält, und das Erhitzen der Masse beim Schmelzen während ihres Durchganges durch die Läuterungszone vorzugsweise auf eine Temperatur zwischen 1370 und 1480 °C erfolgt, wobei die geschmolzene Masse während ihres Transportes zwischen der Schmelzzone und der Läuterungszone gegebenenfalls abgekühlt wird.

FIG.1

FIG.2

FIG.3

FIG.4